# EUROPÄISCHE PATENTSCHRIFT

(11) **EP 4 297 989 B1**
(45) Veröffentlichungstag und Bekanntmachung des Hinweises auf die Patenterteilung: **07.05.2025**
(21) Anmeldenummer: 22710298.5
(22) Anmeldetag: 09.02.2022
(51) Int. Cl.: B60K 15/035, B60K 15/04

(54) **TANKEINFÜLLSTUTZEN MIT FLÜSSIGKEITSABSCHEIDER**
TANK FILLER NECK COMPRISING A LIQUID SEPARATOR
COL DE REMPLISSAGE DE RÉSERVOIR COMPRENANT UN SÉPARATEUR DE LIQUIDE

(30) Priorität: 26.02.2021 DE 102021201826
(43) Veröffentlichungstag der Anmeldung: 03.01.2024
(73) Patentinhaber: VOLKSWAGEN AKTIENGESELLSCHAFT, 38440 Wolfsburg (DE)
(72) Erfinder: BERLIN, Ralf, 39638 OT Wiepke / Gardelegen (DE); DIESTELHORST, Axel, 38446 Wolfsburg (DE)
(86) Internationale Anmeldenummer: PCT/EP2022/053101
(87) Internationale Veröffentlichungsnummer: WO 2022/179850

(56) Entgegenhaltungen:
- EP-A1- 3 738 810
- US-A- 4 630 749
- US-A- 4 926 914

## Beschreibung

Die Erfindung betrifft gemäß dem Oberbegriff des Patentanspruchs 1 einen Tankeinfüllstutzen, der einen Flüssigkeitsabscheider aufweist und am oberen Ende eines zu einem Kraftstoffbehälter führenden Einfüllrohrs angeordnet ist.

Ein Kraftstofftank (auch als Kraftfahrzeugtank bezeichnet) dient der Bevorratung von Kraftstoff, wie insbesondere Ottokraftstoff (Benzin) oder Dieselkraftstoff, in einem Kraftfahrzeug. Ein solcher Kraftstofftank ist typischerweise aufgebaut aus einem Kraftstoffbehälter (auch als Tankblase bezeichnet), ein an seinem unteren Ende in den Kraftstoffbehälter mündendes Einfüllrohr, über das beim Betanken der Kraftstoff in den Kraftstoffbehälter fließt, und einen am oberen Ende des Einfüllrohrs angeordneten Tankeinfüllstutzen mit einer Einführöffnung für ein Zapfventil, welches typischerweise als Zapfpistole ausgebildet ist. Ein solcher Kraftstofftank ist beispielsweise aus den Patentschriften DE 198 02 078 B4 und US 6,006,799 A bekannt.

Die Patentschrift DE 10 2015 010 354 B4 (siehe auch US 10,245,942 B2) beschreibt eine Betriebsmitteltankanordnung mit einem Tankeinfüllstutzen, der für die vorliegende Erfindung als nächstliegender Stand der Technik angesehen wird. Im oberen Ende des Einfüllrohrs ist ein Führungseinsatz zur Führung einer Zapfeinrichtung (Zapfventil) angeordnet. Der Führungseinsatz weist eine schwenkbewegliche Verschlussklappe auf, die beim Einbringen der Zapfeinrichtung elastisch ausgelenkt wird. Ferner ist ein Flüssigkeitsabscheider vorgesehen. Dieser dient dem Abscheiden von flüssigem Betriebsmittel aus einem Gemisch aus Luft, gasförmigem Betriebsmittel und flüssigem Betriebsmittel. Der Flüssigkeitsabscheider weist ein becherförmig beziehungsweise topfförmig ausgestaltetes Abscheidergehäuse auf, das am Einfüllrohr befestigt ist. Das Abscheidergehäuse weist einen Abscheideraum auf, welcher einerseits über eine Entlüftungsleitung an den Betriebsmitteltank angeschlossen ist. Andererseits ist der Abscheideraum mit einer Filtereinrichtung strömungsverbunden. Weiterhin steht der Flüssigkeitsabscheider beziehungsweise der Abscheideraum in Strömungsverbindung mit dem Einfüllrohr, sodass abgeschiedenes flüssiges Betriebsmittel durch das Einfüllrohr in Richtung des Betriebsmitteltanks fließen kann. Der Flüssigkeitsabscheider ist als Labyrinthabscheider ausgebildet.

Die den nächstliegenden Stand der Technik bildende EP 3 738 810 A1 beschreibt eine Entlüftungsvorrichtung zur Entlüftung eines Kraftfahrzeugtanks mit einem im oberen Ende des Einfüllrohrs eingebauten Flüssigkeitsabscheider für die Betriebsentlüftung des Kraftfahrzeugtanks.

Zum Stand der Technik wird ferner hingewiesen auf die Patentschriften WO 2014/030160 A1, DE 196 05 922 B4, DE 20 2008 001 586 U1 (siehe auch EP 1 955 888 B1), US 4,926,914 A und US 4,630,749 A.

Die vorliegende Erfindung offenbart einen Tankeinfüllstutzen gemäß den Merkmalen des Anspruchs 1.

Der erfindungsgemäße Tankeinfüllstutzen des Patentanspruchs 1 weist einen kompakten und effektiven Flüssigkeitsabscheider auf. Vorteilhafte Weiterbildungen des erfindungsgemäßen Tankeinfüllstutzens und zusätzliche Merkmale ergeben sich aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und den Figuren.

Der erfindungsgemäße Tankeinfüllstutzen ist am oberen Ende eines zu einem Kraftstoffbehälter führenden Einfüllrohrs angeordnet oder anordenbar und umfasst einen am oberen Ende des Einfüllrohrs befestigten Flüssigkeitsabscheider, der einen in Strömungsverbindung, insbesondere in direkter Strömungsverbindung, mit dem Einfüllrohr stehenden Abscheideraum (zum Abscheiden von flüssigem Kraftstoff beziehungsweise Kraftstofftröpfchen aus einem Luft-Kraftstoff-Gemisch) aufweist, d. h., der Abscheideraum ist zur Abführung von abgeschiedenem Kraftstoff strömungstechnisch an das Einfüllrohr angeschlossen. An diesen Abscheideraum ist auch eine Entlüftungsleitung des Kraftstoffbehälters (strömungstechnisch) angeschlossen oder anders gesagt, dieser Abscheideraum ist über eine Entlüftungsleitung an den Kraftstoffbehälter angeschlossen beziehungsweise anschließbar. Der erfindungsgemäße Tankeinfüllstutzen umfasst bevorzugt auch einen im oberen Ende des Einfüllrohrs angeordneten Führungseinsatz oder dergleichen zur Aufnahme eines Zapfventils.

Erfindungsgemäß ist vorgesehen, dass der Abscheideraum des Flüssigkeitsabscheiders im Wesentlichen kreisringzylindrisch ausgebildet ist und dass ferner ein seitlicher außermittiger Anschluss für die Entlüftungsleitung vorgesehen ist, sodass sich im kreisringzylindrischen Abscheideraum eine Wirbelströmung ausbilden kann beziehungsweise eine solche Wirbelströmung erzeugbar ist.

Unter einem kreisringzylindrischen Abscheideraum wird ein zylindrischer Hohlraum mit kreisringförmiger Grundfläche verstanden, der sich entlang einer Zylinderachse beziehungsweise Mittelachse erstreckt. Bevorzugt weist der kreisringzylindrische Abscheideraum im Wesentlichen eine vertikale Ausrichtung auf, womit gemeint ist, dass die Zylinderachse zumindest näherungsweise vertikal verläuft (beispielsweise in einem Bereich von 0° bis 10° zur Vertikalen).

Unter einem seitlichen Anschluss wird bevorzugt verstanden, dass die Entlüftungsleitung nicht stirnseitig oder bodenseitig beziehungsweise axial, sondern seitlich angeschlossen ist beziehungsweise seitlich in den kreisringzylindrischen Abscheideraum einmündet, insbesondere an einer zylindrischen Mantelwand (beispielsweise der Außenmantelwand des Abscheidergehäuses; s. u.). Unter einem seitlichen außermittigen Anschluss wird verstanden, dass die Anschlussachse des seitlichen Anschlusses bezüglich der Zylinderachse des kreisringzylindrischen Abscheideraums versetzt ist. Der seitliche außermittige Anschluss der Entlüftungsleitung führt dazu, dass das aus der Entlüftungsleitung austretende Luft-Kraftstoff-Gemisch nicht radial, sondern tangentenartig (tangential) beziehungsweise sekantenartig in den kreisringzylindrischen Abscheideraum einströmt und sich dadurch im kreisringzylindrischen Abscheideraum eine Wirbelströmung ausbildet beziehungsweise eine Wirbelströmung erzeugt wird.

Unter einer Wirbelströmung wird eine Rotationsströmung im kreisringzylindrischen Abscheideraum verstanden, wobei das aus der Entlüftungsleitung einströmende Luft-Kraftstoff-Gemisch in einer bestimmten Rotationsrichtung den kreisringzylindrischen Abscheideraum vollumfänglich durchströmt beziehungsweise im kreisringzylindrischen Abscheideraum zirkuliert. Aufgrund von Zentrifugalkräften wird der im Luft-Kraftstoff-Gemisch enthaltene flüssige Kraftstoff an der Innenumfangsfläche einer zylindrischen Mantelwand des Abscheideraums abgeschieden und kann dann in das Einfüllrohr abfließen beziehungsweise abtropfen. Dadurch wird einerseits eine äußerst effektive Abscheidung realisiert (die auch hohen Anforderungen an die Abscheidungsgüte gerecht wird) und andererseits ein kompakter beziehungsweise kleinbauender Aufbau des Flüssigkeitsabscheiders ermöglicht. Der Vorgang des Abscheidens kann im Übrigen auch als "Ausperlen" (drop formation) bezeichnet werden.

Erfindungsgemäß weist der Flüssigkeitsabscheider ein am Einfüllrohr befestigtes, insbesondere nach oben gerichtetes, Abscheidergehäuse auf, welches ein becherförmiges beziehungsweise napfartiges Außengehäuse mit einem (oberen) Boden und mit einer im Wesentlichen zylindrischen Außenmantelwand (Außenwandung) sowie ein konzentrisch im Außengehäuse angeordnetes Innengehäuse mit einer im Wesentlichen zylindrischen Innenmantelwand (Innenwandung) umfasst. Der kreisringzylindrische Abscheideraum erstreckt sich zwischen der Außenmantelwand und der Innenmantelwand. Bevorzugt ist vorgesehen, dass sich der seitliche außermittige Anschluss für die Entlüftungsleitung an der zylindrischen Außenmantelwand des Abscheidergehäuses befindet.

Der zwischen dem Außengehäuse und dem Innengehäuse angeordnete kreisringzylindrische Abscheideraum bildet zugleich einen Einlassraum für das mit flüssigem Kraftstoff beziehungsweise mit Kraftstofftröpfchen durchsetzte Luft-Kraftstoff-Gemisch. Bevorzugt ist vorgesehen, dass das Innengehäuse einen von der Innenmantelwand (seitlich) umschlossenen Auslassraum für das von flüssigem Kraftstoff beziehungsweise von Kraftstofftröpfchen befreite Luft-Kraftstoff-Gemisch bildet. Dieser Auslassraum ist bevorzugt über einen bodenseitigen (d. h. am Boden des Abscheidergehäuses angeordneten) Anschluss an eine Filtereinrichtung, insbesondere eine Aktivkohlefiltereinrichtung, (strömungstechnisch) angeschlossen beziehungsweise anschließbar. Außerdem steht dieser Auslassraum bevorzugt in Strömungsverbindung, insbesondere in direkter Strömungsverbindung, mit dem Einfüllrohr.

Im Auslassraum des Abscheidergehäuses kann ein Roll-Over-Ventil angeordnet sein, welches bei einem Überschlag des Kraftfahrzeugs den zur Filtereinrichtung führenden Anschluss verschließt beziehungsweise versperrt und ein Auslaufen des Kraftstoffs zur Filtereinrichtung verhindert. Die Anordnung des Roll-Over-Ventils im Auslassraum des Abscheidergehäuses gelingt ohne zusätzlichen Platzbedarf.

Der Auslassraum des Flüssigkeitsabscheiders kann einen den bodenseitigen Anschluss (für die Filtereinrichtung) umfassenden beziehungsweise zum bodenseitigen Anschluss führenden Auslassbereich aufweisen, wobei es sich quasi um eine Auslasskammer des Auslassraums handelt, die sich insbesondere in einem oberen beziehungsweise bodennahen Bereich des Auslassraums befindet. Mit anderen Worten: Der Auslassbereich befindet sich insbesondere im oberen Abschnitt des Auslassraums, in dem sich auch der bodenseitige Anschluss für die Filtereinrichtung befindet. In diesem Auslassbereich ist bevorzugt auch das Roll-Over-Ventil angeordnet.

Der Flüssigkeitsabscheider beziehungsweise das Abscheidergehäuse weist bevorzugt einen schwenkbeweglich gelagerten Verschlussdeckel auf, mit dem der Auslassbereich beziehungsweise die Auslasskammer des Auslassraums (s. o.) beim Einführen des Zapfventils verschlossen wird beziehungsweise verschließbar ist. (Dieser Vorschlussdeckel kann auch als Sperrelement aufgefasst werden.) Dieser Verschlussdeckel ist insbesondere auch im Auslassraum, d. h. innerhalb des Auslassraums, angeordnet, wodurch eine optimale Bauraumausnutzung ohne zusätzlichen Platzbedarf gelingt. Beim Einführen des Zapfventils in das Einfüllrohr beziehungsweise in die Einführöffnung am oberen Ende des Einfüllrohrs wird der Verschlussdeckel betätigt beziehungsweise verschwenkt, sodass der Auslassbereich des Auslassraums automatisch verschlossen beziehungsweise versperrt wird und die Strömungsverbindung zur Filtereinrichtung unterbrochen ist. Somit können beim Betanken keine Betankungsgase und insbesondere auch keine Entlüftungsgase der Kraftstoffbehälterentlüftung zur Filtereinrichtung gelangen, wodurch die Filtereinrichtung entlastet wird. Bevorzugt ist (im Abscheidergehäuse) auch wenigstens ein Federelement oder dergleichen vorhanden, welches den Verschlussdeckel in seine geöffnete Stellung vorspannt, sodass beim Herausziehen des Zapfventils der Auslassbereich des Auslassraums wieder automatisch geöffnet und die Strömungsverbindung zur Filtereinrichtung freigegeben wird. Mittels des schwenkbeweglichen Verschlussdeckels wird also eine die Filtereinrichtung entlastende Schaltfunktion realisiert.

Der schwenkbewegliche Verschlussdeckel kann beim Einführen des Zapfventils direkt durch dieses betätigt werden, wie nachfolgend noch näher erläutert. Bevorzugt ist jedoch vorgesehen, dass der Verschlussdeckel mit einer schwenkbeweglich gelagerten Verschlussklappe für die Einführöffnung des Zapfventils bewegungsgekoppelt ist, sodass beim Einführen des Zapfventils eine mittelbare Betätigung durch die Verschlussklappe erfolgt, wie nachfolgend noch näher erläutert. Die Verschlussklappe ist bevorzugt Bestandteil eines Führungseinsatzes. Bevorzugt sind dann auch Federelemente oder dergleichen vorhanden, welche den Verschlussdeckel beziehungsweise das Sperrelement in eine geöffnete Stellung und die Verschlussklappe in eine geschlossene Stellung vorspannen. Dadurch wird beim Herausziehen des Zapfventils automatisch der Auslassbereich wieder geöffnet und die Einführöffnung wieder verschlossen.

Die vorausgehend und/oder nachfolgend beschriebenen sowie gegebenenfalls in der Zeichnung gezeigten Komponenten, insbesondere der Tankeinfüllstutzen, der Kraftstoffbehälter, das Einfüllrohr, der Flüssigkeitsabscheider, die Entlüftungsleitung, die Filtereinrichtung und/oder der Führungseinsatz, können im Rahmen der hierin beschriebenen Kombinationen eine sogenannte Tankanordnung für ein Kraftfahrzeug beziehungsweise eine Kraftfahrzeug-Tankanordnung bilden.

Nachfolgend werden besonders bevorzugte Ausführungsbeispiele der Erfindung mit Bezug auf die Figuren näher erläutert. Die in den Figuren gezeigten und/oder nachfolgend erläuterten Merkmale können, auch unabhängig von konkreten Merkmalskombinationen, allgemeine Merkmale der Erfindung sein und die Erfindung entsprechend weiterbilden.
- Fig. 1: zeigt einen erfindungsgemäßen Tankeinfüllstutzen und ein eingeführtes Zapfventil.
- Fig. 2: zeigt in einer Schnittdarstellung (gemäß dem in Fig. 1 angegebenen Schnittverlauf A-A) ein erstes Ausführungsbeispiel des Tankeinfüllstutzens ohne Zapfventil.
- Fig. 3: zeigt in einer Schnittdarstellung (gemäß dem in Fig. 1 angegebenen Schnittverlauf A-A) ein zweites Ausführungsbeispiel des Tankeinfüllstutzens ohne Zapfventil.
- Fig. 4: zeigt das zweite Ausführungsbeispiel der Fig. 3 mit eingeführtem Zapfventil.
- Fig. 5: zeigt in einer Schnittdarstellung analog zur Fig. 4 ein drittes Ausführungsbeispiel des Tankeinfüllstutzens mit eingeführtem Zapfventil.

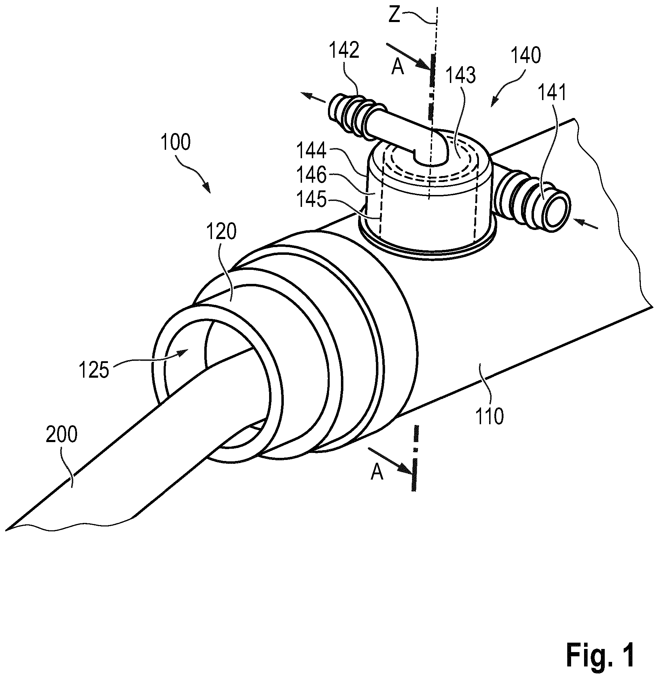

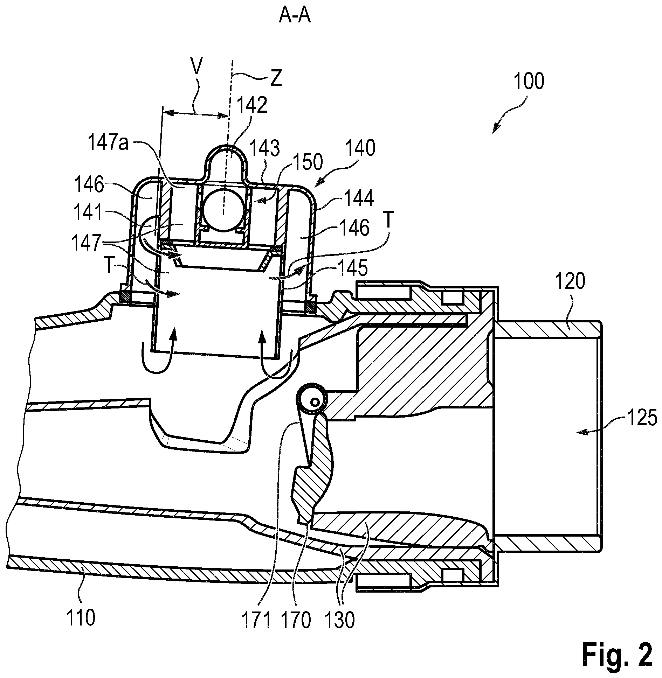

Der in Fig. 1 gezeigte Einfüllstutzen 100 ist am oberen Ende eines Einfüllrohrs 110 angeordnet, welches zu einem Kraftstoffbehälter führt. Am Einfüllrohr 110 ist eine insbesondere als Gewindering ausgebildete Aufsatzmanschette 120 befestigt, die eine Einführöffnung 125 für ein nur teilweise dargestelltes Zapfventil (Zapfpistole) 200 umrandet. Im Einfüllrohr 110 ist ein mehrteiliger Führungseinsatz 130 (siehe Fig. 2) zur Aufnahme und Führung des Zapfventils 200 angeordnet. Am Einfüllrohr 110 ist ferner ein Flüssigkeitsabscheider 140 befestigt. Der Flüssigkeitsabscheider 140 weist zwei als Anschlussnippel beziehungsweise Anschlussstutzen ausgebildete Anschlüsse 141 und 142 auf, die als Einlass und Auslass fungieren (siehe Pfeile in Fig. 1). Am seitlichen Anschluss 141 des Flüssigkeitsabscheiders 140 ist eine Entlüftungsleitung des Kraftstoffbehälters (sogenannte Kraftstoffbehälterentlüftung beziehungsweise Tankentlüftung) angeschlossen. Am oberen bodenseitigen Anschluss 142 ist mittels Verbindungsleitung oder dergleichen eine bevorzugt extern angeordnete Filtereinrichtung, insbesondere eine Aktivkohlefiltereinrichtung, angeschlossen. Der Führungseinsatz 130 und das Abscheidergehäuse des Flüssigkeitsabscheiders 140 sind bevorzugt aus Kunststoff gefertigt, wobei es sich insbesondere um Kunststoffspritzgussteile handelt. Die Aufsatzmanschette 120 ist bevorzugt aus Metall gebildet, zwecks Ableitung von elektrostatischen Aufladungen.

Wie aus allen Figuren ersichtlich, umfasst das am Einfüllrohr 110 mit im Wesentlichen vertikaler Ausrichtung (siehe Mittelachse Z) befestigte Abscheidergehäuse des Flüssigkeitsabscheiders 140 ein becherförmiges Außengehäuse mit einem Boden 143 und einer zylindrischen Außenmantelwand 144 sowie ein konzentrisch im Außengehäuse angeordnetes Innengehäuse mit einer zylindrischen Innenmantelwand 145. Die Innenmantelwand 145 ist in axialer Richtung Z länger als die Außenmantelwand 144 ausgebildet und ragt (nach unten) in das Einfüllrohr 110 hinein.

Zwischen der Außenmantelwand 144 und der Innenmantelwand 145 erstreckt sich ein als Ringraum ausgebildeter kreisringzylindrischer Abscheideraum 146. Dieser kreisringzylindrische Abscheideraum 146 ist ein erster Teilraum, der zugleich als Einlassraum für das aus der Entlüftungsleitung durch den seitlichen Anschluss 141 einströmende Luft-Kraftstoff-Gemisch fungiert. In diesem Abscheideraum 146 werden dann flüssiger Kraftstoff beziehungsweise Kraftstofftröpfchen aus dem einströmenden Luft-Kraftstoff-Gemisch abgeschieden, wie nachfolgend noch näher erläutert. Das Innengehäuse bildet einen von der Innenmantelwand 145 seitlich umschlossenen, im Wesentlichen zylindrischen zweiten Teilraum 147, der als Auslassraum fungiert und über den bodenseitigen Anschluss 142 an die Filtereinrichtung angeschlossen ist. Der zweite Teilraum beziehungsweise Auslassraum 147 ist in radialer Richtung quasi vom ersten Teilraum beziehungsweise Abscheideraum 146 umgeben. Der Auslassraum 147 weist einen oberen Auslassbereich beziehungsweise eine obere Auslasskammer 147a auf, der sich direkt unterhalb des Anschlusses beziehungsweise Auslasses 142 befindet. In diesem Auslassbereich 147a ist ein Roll-Over-Ventil 150 angeordnet. Sowohl der kreisringzylindrische Abscheideraum 146 als auch die Auslasskammer 147 sind nach unten, d. h. bezüglich ihrer axialen Ausrichtung Z an ihren unteren Enden, offen und stehen somit in direkter Strömungsverbindung mit dem Einfüllrohr 110.

Das mit flüssigem Kraftstoff beziehungsweise mit Kraftstofftröpfchen durchsetzte Luft-Kraftstoff-Gemisch aus der Kraftstoffbehälterentlüftung strömt durch den seitlichen Anschluss beziehungsweise Einlass 141 in den kreisringzylindrischen Abscheideraum 146 ein und kann darin vollumfänglich zirkulieren. Der Anschluss 141 ist außermittig angeordnet, d. h., die Anschlussachse ist bezüglich der vertikalen Zylinderachse beziehungsweise Mittelachse Z versetzt (siehe Pfeil V in Fig. 2). Dadurch wird im kreisringzylindrischen Abscheideraum 146 eine Wirbelströmung T erzeugt, wie in Fig. 2 durch Strömungspfeile veranschaulicht. Aufgrund von Zentrifugalkräften wird der im Luft-Kraftstoff-Gemisch enthaltene flüssige Kraftstoff im Wesentlichen an der Innenumfangsfläche der Außenmantelwand 144 abgeschieden und kann dann nach unten in das Einfüllrohr 110 abfließen beziehungsweise abtropfen. Beim Eintritt des Luft-Kraftstoff-Gemischs in den viel größeren Raum des Einfüllrohres 110 verringert sich dessen Strömungsgeschwindigkeit, was die weitere Abscheidung (drop out) noch verbliebener flüssiger Kraftstoffanteile begünstigt, die als Tröpfchen nach unten (in das Einfüllrohr 110) abtropfen. Das auf diese Weise von flüssigen Kraftstoffanteilen befreite und somit im Wesentlichen nur Gasanteile enthaltende Luft-Kraftstoff-Gemisch kann dann von unten in den Auslassraum 147 einströmen (siehe Strömungspfeile) und am Roll-Over-Ventil 150 vorbei durch den Anschluss beziehungsweise Auslass 142 zur Filtereinrichtung abströmen.

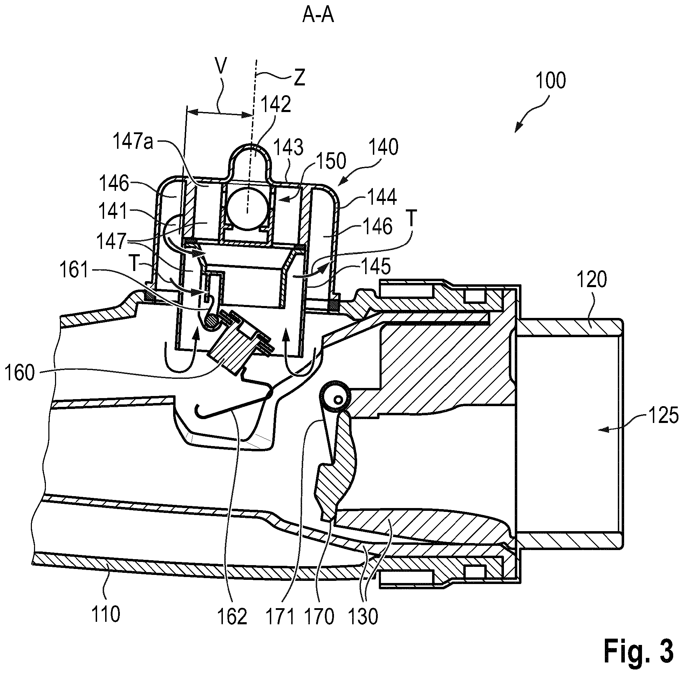

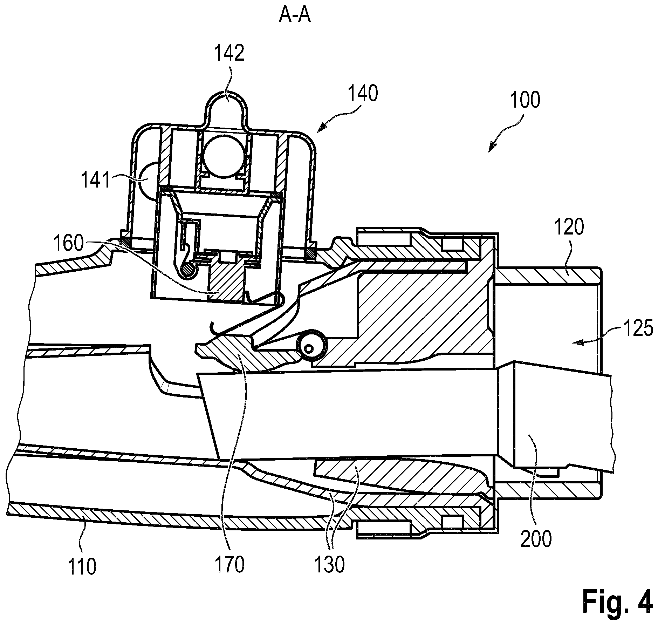

Bei dem in Fig. 3 und Fig. 4 gezeigten zweiten Ausführungsbeispiel ist im Auslassraum 147 des Flüssigkeitsabscheiders 140 ein schwenkbeweglich gelagerter Verschlussdeckel beziehungsweise ein schwenkbewegliches Sperrelement 160 angeordnet, mit dem der obenliegende Auslassbereich 147a verschlossen beziehungsweise versperrt werden kann. Der Verschlussdeckel 160 kann Dichtringe oder dergleichen aufweisen. Dieser Verschlussdeckel 160 ist mit einer am Führungseinsatz 130 schwenkbeweglich gelagerten Verschlussklappe 170 für die Einführöffnung 125 des Zapfventils 200 bewegungsgekoppelt, derart, dass der Auslassbereich beziehungsweise die Auslasskammer 147a beim Einführen des Zapfventils 200 automatisch verschlossen wird, wie in Fig. 4 gezeigt. Der Verschlussdeckel 160 weist hierzu einen Bügel beziehungsweise Hebel 162 oder dergleichen für die mittelbare Betätigung durch die Verschlussklappe 170 auf. Ferner sind Federelemente 161, 171 vorgesehen, die einen Federmechanismus bilden, der den Verschlussdeckel 160 in die geöffnete Stellung und die Verschlussklappe 170 in die geschlossene Stellung vorspannt (wie in Fig. 3 gezeigt), sodass beim Herausziehen des Zapfventils 200 der Verschlussdeckel 160 öffnet und die Verschlussklappe 170 schließt.

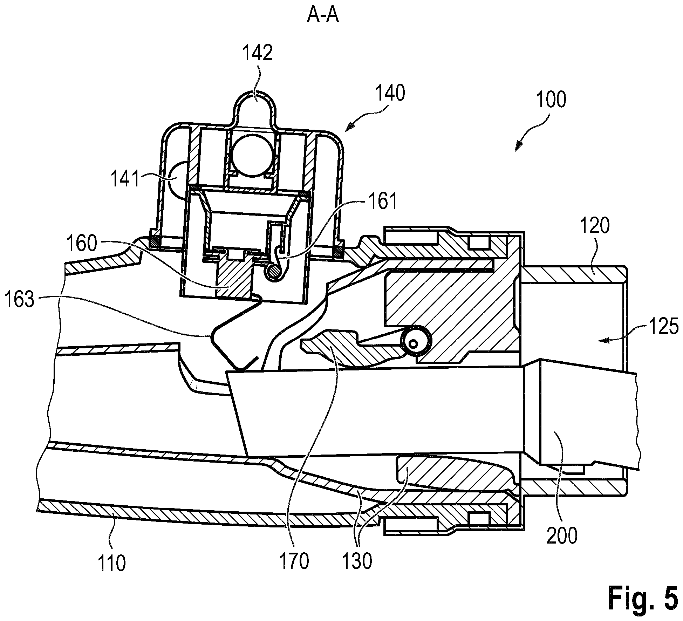

Bei dem in Fig. 5 gezeigten dritten Ausführungsbeispiel ist ebenfalls ein schwenkbeweglich gelagerter Verschlussdeckel 160 vorgesehen, der beim Einführen des Zapfventils 200 automatisch verschlossen wird, indem jedoch das Zapfventil 200 gegen einen Bügel beziehungsweise Hebel 163 oder dergleichen des Verschlussdeckels 160 drückt. Die Betätigung des Verschlussdeckels 160 erfolgt hier quasi direkt durch das Zapfventil 200. Der Verschlussdeckel 160 wird durch das Federelement 161 in die geöffnete Stellung vorgespannt, sodass der Auslassbereich 147a (siehe Fig. 3) beim Herausziehen des Zapfventils 200 wieder geöffnet wird.

Durch den Verschlussdeckel beziehungsweise das Sperrelement 160 des zweiten und dritten Ausführungsbeispiels ist der Tankeinfüllstutzen 100 mit einer Schaltfunktion ausgestattet, um sowohl eine Betriebsentlüftung als auch eine Betankungsentlüftung zu realisieren. Im Betriebszustand (siehe Fig. 3) ist der Verschlussdeckel 160 geöffnet. Die Betriebsentlüftung des Kraftstoffbehälters erfolgt in der zuvor beschriebenen Weise über den Flüssigkeitsabscheider 140 zur Filtereinrichtung. Im Betankungszustand (siehe Fig. 4 und Fig. 5) ist der Verschlussdeckel 160 geschlossen, wodurch der Weg zur Filtereinrichtung absolut versperrt beziehungsweise die Strömungsverbindung zwischen dem Einfüllrohr 110 und der Filtereinrichtung unterbrochen ist. Trotz dieser unterbrochenen Strömungsverbindung zur Filtereinrichtung kann ungehindert das Luft-Kraftstoff-Gemisch aus der Kraftstoffbehälterentlüftung im kreisringzylindrischen Abscheideraum 146 von flüssigen Kraftstoffanteilen befreit werden, wie obenstehend erläutert. Zur Betankungsentlüftung beim Betankungsvorgang können die (von flüssigen Kraftstoffanteilen befreiten) Entlüftungsgase der Kraftstoffbehälterentlüftung und die außerdem beim Betankungsvorgang freigesetzten Gase (Betankungsgase) durch die Einführöffnung 125 in die Atmosphäre entweichen oder werden insbesondere über das Zapfventil 200 abgesaugt (sogenanntes Gaspendelverfahren). Während eines Betankungsvorgangs ist die Filtereinrichtung also weder Betankungsgasen noch Entlüftungsgasen ausgesetzt und wird somit entlastet.

Der Flüssigkeitsabscheider 140 bildet zusammen mit dem Roll-Over-Ventil 150 sowie gegebenenfalls dem Verschlussdeckel 160 (insbesondere einschließlich des Federelements 161) eine kompakte vorfertigbare Baueinheit (einschließlich des Abscheidergehäuses), die in einfacher Weise am entsprechend vorbereiteten Einfüllrohr 110 befestigbar ist. Die Befestigung erfolgt bevorzugt durch Klipselemente, Verklebung oder Verschweißung.

### Bezugszeichenliste

- 100: Tankeinfüllstutzen
- 110: Einfüllrohr
- 120: Manschette
- 125: Einführöffnung
- 130: Führungseinsatz
- 140: Flüssigkeitsabscheider
- 141: Anschluss (Einlass)
- 142: Anschluss (Auslass)
- 143: Boden
- 144: Außenmantelwand
- 145: Innenmantelwand
- 146: Abscheideraum (Einlassraum)
- 147: Auslassraum
- 147a: Auslassbereich (Auslasskammer)
- 150: Roll-Over-Ventil
- 160: Verschlussdeckel (Sperrelement)
- 161: Federelement
- 162: Bügel (Hebel)
- 163: Bügel (Hebel)
- 170: Verschlussklappe
- 171: Federelement
- 200: Zapfventil
- T: Wirbelströmung
- V: Versatz
- Z: Zylinderachse, Mittelachse

## Patentansprüche

1. Tankeinfüllstutzen (100), der am oberen Ende eines zu einem Kraftstoffbehälter führenden Einfüllrohrs (110) angeordnet ist, mit einem am oberen Ende des Einfüllrohrs (110) befestigten Flüssigkeitsabscheider (140), der einen in Strömungsverbindung mit dem Einfüllrohr (110) stehenden Abscheideraum (146) aufweist, an den eine Entlüftungsleitung des Kraftstoffbehälters angeschlossen ist,
wobei der Abscheideraum (146) des Flüssigkeitsabscheiders (140) kreisringzylindrisch ausgebildet ist und einen seitlichen außermittigen Anschluss (141) für die Entlüftungsleitung aufweist, sodass sich im kreisringzylindrischen Abscheideraum (146) eine Wirbelströmung (T) ausbilden kann,
**dadurch gekennzeichnet, dass**
der Flüssigkeitsabscheider (140) ein am Einfüllrohr (110) befestigtes Abscheidergehäuse aufweist, das ein becherförmiges Außengehäuse mit einem Boden (143) und einer zylindrischen Außenmantelwand (144) sowie ein konzentrisch im Außengehäuse angeordnetes Innengehäuse mit einer zylindrischen Innenmantelwand (145) umfasst, wobei sich der kreisringzylindrische Abscheideraum (146) zwischen der Außenmantelwand (144) und der Innenmantelwand (145) erstreckt.

2. Tankeinfüllstutzen (100) nach Anspruch 1,
**dadurch gekennzeichnet, dass**
die Zylinderachse (Z) des kreisringzylindrischen Abscheideraums (146) eine vertikale Ausrichtung aufweist.

3. Tankeinfüllstutzen (100) nach Anspruch 1 oder 2,
**dadurch gekennzeichnet, dass**
das Innengehäuse einen von der Innenmantelwand (145) umschlossenen und in Strömungsverbindung mit dem Einfüllrohr (110) stehenden Auslassraum (147) bildet, der über einen bodenseitigen Anschluss (142) an eine Filtereinrichtung angeschlossen ist.

4. Tankeinfüllstutzen (100) nach Anspruch 3,
**dadurch gekennzeichnet, dass**
im Auslassraum (147) ein Roll-Over-Ventil (150) angeordnet ist.

5. Tankeinfüllstutzen (100) nach Anspruch 3 oder 4,
**dadurch gekennzeichnet, dass**
der Auslassraum (147) einen den bodenseitigen Anschluss (142) umfassenden Auslassbereich (147a) aufweist, wobei ein schwenkbeweglich gelagerter Verschlussdeckel (160) vorhanden ist, mit dem dieser Auslassbereich (147a) beim Einführen eines Zapfventils (200) verschlossen wird.

6. Tankeinfüllstutzen (100) nach Anspruch 5,
**dadurch gekennzeichnet, dass**
ein Federelement (161) vorhanden ist, das den Verschlussdeckel (160) in die geöffnete Stellung vorspannt.

7. Tankeinfüllstutzen (100) nach Anspruch 5 oder 6,
**dadurch gekennzeichnet, dass**
der Verschlussdeckel (160) mit einer schwenkbeweglich gelagerten Verschlussklappe (170) für die Einführöffnung (125) des Zapfventils (200) bewegungsgekoppelt ist.

8. Tankeinfüllstutzen (100) nach Anspruch 4 und einem der Ansprüche 5, 6 oder 7,
**dadurch gekennzeichnet, dass**
der Flüssigkeitsabscheider (140) zusammen mit dem Roll-Over-Ventil (150) und dem Verschlussdeckel (160) eine Baueinheit bildet.

## Claims

1. Fuel-tank filler neck (100), which is arranged at the upper end of a filling pipe (110) leading to a fuel tank, the filler neck comprising a liquid separator (140) fastened to the upper end of the filling pipe (110), which separator has a separating chamber (146) in flow connection with the filling pipe (110), to which chamber a vent line of the fuel tank is connected,
the separating chamber (146) of the liquid separator (140) being annular cylindrical and having a lateral off-center connection (141) for the vent line, so that a vortex flow (T) can form in the annular cylindrical separating chamber (146),
**characterized in that**
the liquid separator (140) has a separator housing which is fastened to the filling pipe (110) and which comprises a cup-shaped outer housing having a base (143) and a cylindrical outer casing wall (144) and an inner housing that is arranged concentrically in the outer housing and has a cylindrical inner casing wall (145), the annular cylindrical separating chamber (146) extending between the outer casing wall (144) and the inner casing wall (145).

2. Fuel-tank filler neck (100) according to claim 1,
**characterized in that**
the cylinder axis (Z) of the annular cylindrical separating chamber (146) has a vertical orientation.

3. Fuel-tank filler neck (100) according to either claim 1 or claim 2,
**characterized in that**
the inner housing forms an outlet chamber (147) which is enclosed by the inner casing wall (145), is in flow connection with the filling pipe (110) and is connected to a filter device via a base-side connection (142).

4. Fuel-tank filler neck (100) according to claim 3,
**characterized in that**
a roll-over valve (150) is arranged in the outlet chamber (147).

5. Fuel-tank filler neck (100) according to either claim 3 or claim 4,
**characterized in that**
the outlet chamber (147) has an outlet region (147a) comprising the base-side connection (142), a pivotably mounted closure cover (160) being provided, with which cover this outlet region (147a) is closed when a nozzle (200) is inserted.

6. Fuel-tank filler neck (100) according to claim 5,
**characterized in that**
a spring element (161) is provided which preloads the closure cover (160) into the open position.

7. Fuel-tank filler neck (100) according to either claim 5 or claim 6,
**characterized in that**
the closure cover (160) is motion-coupled to a pivotably mounted closure flap (170) for the insertion opening (125) of the nozzle (200).

8. Fuel-tank filler neck (100) according to claim 4 and any of claims 5, 6 or 7,
**characterized in that**
the liquid separator (140) together with the roll-over valve (150) and the closure cover (160) forms a structural unit.

## Revendications

1. Tubulure de remplissage de réservoir (100) disposée à l'extrémité supérieure d'un tube de remplissage (110) menant à un réservoir de carburant, comportant un séparateur de liquide (140) fixé à l'extrémité supérieure du tube de remplissage (110), lequel séparateur de liquide présente un espace de séparation (146) en liaison par écoulement avec le tube de remplissage (110), espace de séparation auquel est raccordée une conduite d'aération du réservoir de carburant,
dans laquelle l'espace de séparation (146) du séparateur de liquide (140) est réalisée de manière cylindrique à anneau circulaire et présente un raccordement (141) latéral excentré pour la conduite d'aération, de sorte qu'un écoulement tourbillonnaire (T) peut se former dans l'espace de séparation (146) cylindrique à anneau circulaire,
**caractérisée en ce que**
le séparateur de liquide (140) présente un boîtier de séparateur fixé au tube de remplissage (110) et comprend un boîtier extérieur en forme de bécher comportant un fond (143) et une paroi d'enveloppe extérieure (144) cylindrique ainsi qu'un boîtier intérieur disposé de manière concentrique dans le boîtier extérieur et comportant une paroi d'enveloppe intérieure (145) cylindrique, dans laquelle l'espace de séparation (146) cylindrique à anneau circulaire s'étend entre la paroi d'enveloppe extérieure (144) et la paroi d'enveloppe intérieure (145).

2. Tubulure de remplissage de réservoir (100) selon la revendication 1,
**caractérisée en ce que**
l'axe de cylindre (Z) de l'espace de séparation (146) cylindrique à anneau circulaire présente une orientation verticale.

3. Tubulure de remplissage de réservoir (100) selon la revendication 1 ou 2,
**caractérisée en ce que**
le boîtier intérieur forme un espace de sortie (147) entouré par la paroi d'enveloppe intérieure (145) et est en liaison par écoulement avec le tube de remplissage (110), lequel espace de sortie est raccordé à un dispositif de filtrage par l'intermédiaire d'un raccordement (142) côté fond.

4. Tubulure de remplissage de réservoir (100) selon la revendication 3,
**caractérisée en ce que**
une soupape roll-over (150) est disposée dans l'espace de sortie (147).

5. Tubulure de remplissage de réservoir (100) selon la revendication 3 ou 4,
**caractérisée en ce que**
l'espace de sortie (147) présente une zone de sortie (147a) comprenant le raccordement (142) côté fond, dans laquelle un couvercle de fermeture (160) monté pivotant est présent, lequel ferme ladite zone de sortie (147a) lors de l'introduction d'un pistolet de distribution (200).

6. Tubulure de remplissage de réservoir (100) selon la revendication 5,
**caractérisée en ce que**
un élément formant ressort (161) est présent, lequel précontraint le couvercle de fermeture (160) dans la position ouverte.

7. Tubulure de remplissage de réservoir (100) selon la revendication 5 ou 6,
**caractérisée en ce que**
le couvercle de fermeture (160) est accouplé en déplacement avec un clapet de fermeture (170) monté pivotant pour l'ouverture d'introduction (125) du pistolet de distribution (200).

8. Tubulure de remplissage de réservoir (100) selon la revendication 4, ou selon l'une des revendications 5, 6 ou 7,
**caractérisée en ce que**
le séparateur de liquide (140) forme conjointement avec la soupape roll-over (150) et le couvercle de fermeture (160) une unité structurale.
